# EUROPEAN PATENT SPECIFICATION

(11) **EP 1 855 037 B1**
(45) Date of publication and mention of the grant of the patent: **31.03.2010**
(21) Application number: 07380094.8
(22) Date of filing: 11.04.2007
(51) Int. Cl.: F16K 17/196

(54) **Valve, container with valve and the use of the valve**
Ventil, Container mit Ventil und Verwendung des Ventils
Soupape, container avec soupape et utilisation de ladite soupape

(30) Priority: 09.05.2006 ES 200601182
(43) Date of publication of application: 14.11.2007
(73) Proprietor: Borras Llompart, Ignacio, 07470 Puerto de Pollensa, Baleares (ES)
(72) Inventor: Borras Llompart, Ignacio, 07470 Puerto de Pollensa, Baleares (ES)
(74) Representative: Carpintero Lopez, Francisco

(56) References cited:
- DE-A1- 4 408 357
- GB-A- 1 285 733
- US-A- 5 282 492
- US-A1- 2005 028 869

## Description

### TECHNICAL FIELD OF THE INVENTION

The invention is included in the field of valves and of the control systems for controlling the pressure difference between the inside and outside of a container or the like.

### BACKGROUND OF THE INVENTION

Spanish patent application no. 200300479 (publication number ES-2214146) relates to a system for balancing the forces acting on a hermetic container during its sinking in a liquid (for example, in the case of the sinking of a ship). The invention described in said document seeks to prevent the stress generated in the container due to the effect of the increase of the liquid column on the outer side of the container, balancing the forces both in a possible sinking and in a possible refloatation. It is contemplated that the container incorporates one or several tubes traversing the upper deck, at the ends of which there are check valves which only allow the passage of liquid in one direction. The external pressure on the container increases progressively during the sinking of the ship up to a certain depth, causing the valve to open automatically allowing the entrance of liquid into the container to balance the forces applied on the walls. The valves remain open, giving rise to an increase of the internal pressure until a balance is reached with the external pressure, at which time the valves close.

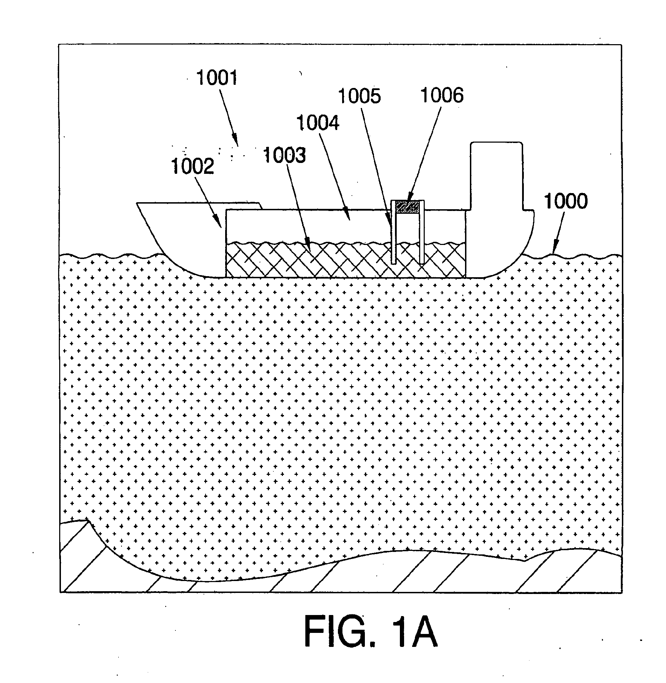

Figures 1A-1C schematically show the process described in ES-2214146. Specifically, an oil tanker 1001 with a hermetic container 1002 containing fuel 1003 and gas 1004 moves on the sea surface. A pipe 1005 communicates the inside of the container with the outside through the upper surface of the container. A valve 1006, which is closed in Figure 1A, is installed at the upper part of the pipe.

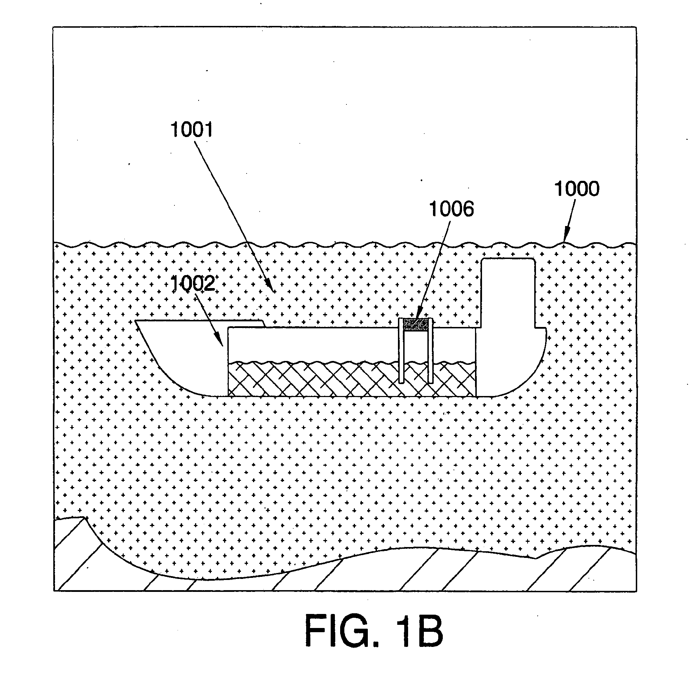

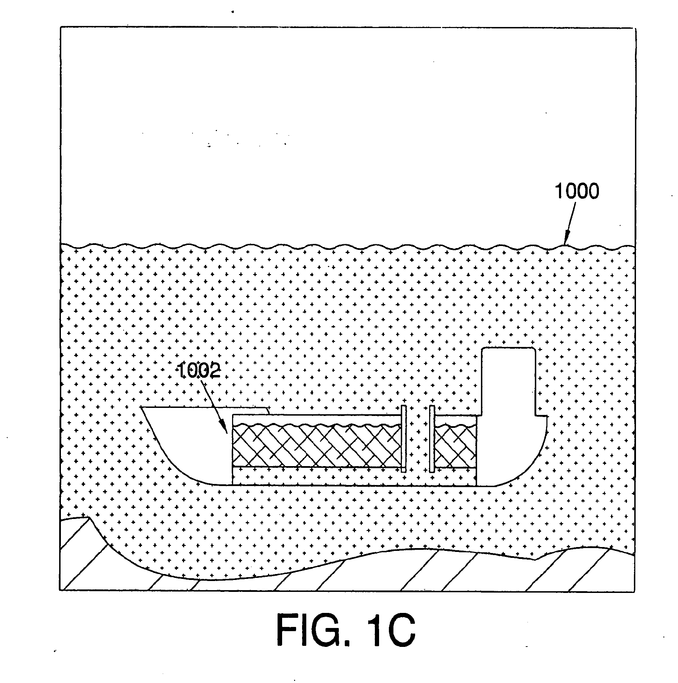

Figure 1 B shows the same tanker during the first phase of its sinking. The valve 1006 is still closed, and the difference between the external pressure (exerted by seawater on the valve) and the internal pressure (basically that of the gas in the container) increases as the tanker continues to sink. When the tanker reaches a depth at which the mentioned difference between the external pressure and the internal pressure exceeds a predetermined threshold, the valve opens (Figure 1 C) and seawater enters the container, such that the difference between the external pressure and the internal pressure is reduced. When the pressure difference has been sufficiently reduced, the valve 1006 closes again.

It is also contemplated that the valve can open in relation to a possible container refloatation operation so as to prevent problems caused by an excessive internal pressure in the container.

This system allows preventing the existence of a pressure difference in the walls of the container which might cause them to burst, whereby the risk of uncontrolled spills towards the outside can be prevented or reduced.

US-A-5282492, DE-A-4408357, GB-1285733 and US-A-2005/0028869 disclose examples of prior art values.

### DESCRIPTION OF THE INVENTION

The invention is defined in claim 1. Preferred embodiments are defined in the dependent claims.

A first aspect of the invention relates to a valve configured to prevent an excessive pressure difference between the outside of a container and the inside of a container in which the valve is installed (for example, in the case of the sinking of the container, for example, at sea). The valve comprises:
a first valve mechanism comprising a first blocking element (a plunger type blocking element, for example), which can move (axially, for example) between a closed position in which it prevents the passage of a fluid, and an open position in which it allows the passage of a fluid between the outside and the inside, through a first part of the valve (for example, through the side walls of a casing of the valve); and
a second valve mechanism comprising a second blocking element which can move between a closed position in which it prevents the passage of a fluid, and an open position in which it allows the passage of a fluid, between the inside and the outside through a second part of the valve (for example, through a lower hole in a "plunger" which the first blocking element is part of, through the inside of that first blocking element, and through holes at the upper part of the first blocking element).

The first blocking element is associated to a first return element (for example, a spring or other elastic element) configured to exert a force on the first blocking element towards its closed position, and the second blocking element is associated to a second return element configured to exert a force on the second blocking element towards its closed position.

Each blocking element comprises a first contact surface configured to make contact with the outside of the container and a second contact surface configured to make contact with the inside of the container when the valve is assembled in the container, such that a fluid in contact with the respective contact surface exerts a pressure force on said contact surface.

The first valve mechanism is configured such that the first blocking element moves from its closed position to a position in which it allows the passage of the fluid, against the force exerted by the first return element, when the pressure on its first contact surface is X greater than the pressure on its second contact surface, X being a predetermined value.

The second valve mechanism is configured such that the second blocking element moves from its closed position to a position in which it allows the passage of the fluid, against the force exerted by the second return element, when the pressure on the second contact surface is Y greater than the pressure on its first contact surface, Y being a predetermined value.

The values X and Y can be equal or different and can be established, for example, by means of the characteristics of the return elements selected by the valve user or manufacturer.

A valve with a simple design which can work independently and ensure a balance in both directions between the internal pressure and the external pressure is thus provided.

Each of said first and second return elements can comprise a spring or the like. These springs can be arranged coaxially with respect to one another. For example, the spring corresponding to the second return element can be located inside the spring corresponding to the first return element.

The first blocking element and the second blocking element can be arranged in an axially movable manner in a tubular casing.

The first valve mechanism can be assembled coaxially with the second valve mechanism.

The movement direction of the first blocking element in its movement between its closed position and its open position can be opposite to the movement direction of the second blocking element in its movement between its closed position and its open position.

The area of the first contact surface of the first blocking element is identical to the area of the second contact surface of the first blocking element, as regards the projection of said contact surfaces on the plane orthogonal to a movement direction of the first blocking element. The same applies to the second blocking element. This can be advantageous because it makes the valve operate equally well regardless of the depth at which it is located.

The first contact surface and the second contact surface of the first blocking element can both be substantially circular (although they can also have other geometric configurations) and have substantially identical diameters, whereby the advantage mentioned above is also achieved. The same can be applied to the second blocking element.

The second blocking element can have an end part penetrating through the second contact surface of the first blocking element (for example, through a hole which can be part of the passage of fluid when the second blocking element is in its open position) (the second element is thus subjected to the internal pressure of the container), and another end part which can project through the first contact surface of the first blocking element (whereby it makes contact with the outside and with the pressure therein found). The second blocking element is thus subjected to both the external pressure and to the internal pressure.

The valve can additionally comprise stress pre-regulation means for pre-regulating the stress of the return elements, which means allow presetting the force that said return means exert on the corresponding blocking elements in their respective blocking positions. These stress pre-regulation means can comprise respective threaded elements assembled such that they are axially movable, by means of rotation, in the valve.

The return elements can be arranged in leak-tight chambers inside the valve, such that they are protected from fluids present outside the container and inside the container when the valve is assembled in the container. This reduces the risk of corrosion of these elements, which are important for the correct operation of the valve. Any of each of these leak-tight chambers can have at least one wall provided with at least one weak area (for example, a rupture disk, or even a valve) to allow controlled breaking in the event of an excessive pressure difference between the inside and the outside of the corresponding leak-tight chamber. The chambers can thus be flooded by fluids coming from the outside or the inside, which can have long-term negative effects on return elements, but in contrast to uncontrolled breaking, it does not prevent the correct short-term operation of the valve.

When the first blocking element is located in its open position, fluid can pass from outside to inside the container through holes which can be located close to the first contact surface of the first blocking element. When the second blocking element is in its open position, fluid can pass from outside to inside the container through holes which can be located close to the second contact surface of the first blocking element.

The first blocking element can have a plurality of holes in correspondence with its first contact surface so as to allow the passage of a fluid from inside the container to the outside when the valve is assembled in the container and when the second blocking element is in its open position.

The valve can comprise a flange configured to fix the valve to the opening of the container with the aid of fixing means.

Another aspect of the invention relates to a container, for example a container located in a ship, comprising at least one valve according to that described above.

Another aspect of the invention relates to the use of a valve according to that described above in a container, for example a container located in a ship, to prevent structural damage to the container due to external or internal overpressure in the case of sinking or refloatation.

The valves can be modified so as to allow a discretionary opening, which can be achieved by means of a simple mechanism (a manual or motor-driven mechanism which can be remotely controlled). It may be recommendable to use pilot-operated valves, i.e. small valves for measuring the pressure difference controlling the opening of the large valve protecting the tank, for large tanks. This may be practical in the case of blocking elements with diameters that are greater than 4 inches for example.

### DESCRIPTION OF THE DRAWINGS

To complement the description and with the aim of aiding of better understand the features of the invention according to preferred practical embodiments thereof, a set of drawings is attached as an integral part of the description, in which the following has been shown with an illustrative and non-limiting character:
Figures 1A-1C schematically show the operation of the system described in ES-2214146.
Figures 2-4 show a sectional elevational view of a valve according to a first preferred embodiment of the invention.
Figure 5 shows a perspective view and another exploded view (which shows some of the components illustrated in Figures 2-4 better) of the valve according to this embodiment of the invention.

### PREFERRED EMBODIMENT OF THE INVENTION

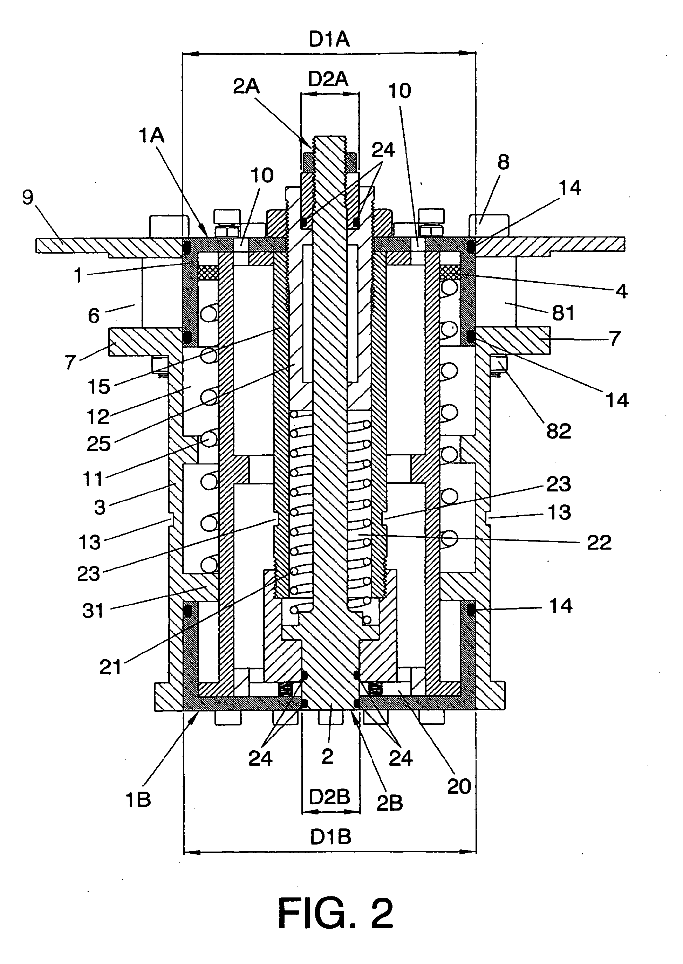

Figure 2 shows a possible embodiment of the invention, in which the valve is assembled in a fixing disk 9 for its attachment to a container. This disk is attached by means of pins 8, bushings 81 and nuts 82, to a flange 7 of the tubular casing 3 of the valve.

As can be seen in Figure 2, a first blocking element 1 is arranged in an axially movable manner inside said tubular casing, which blocking element, in the closed position shown in Figure 2, blocks the passage 6 such that it prevents a fluid from passing from the outside (the part above the wall 9 in Figure 2) and the inside of the container (below the wall 9 in Figure 2). This first blocking element 1 is being pushed towards its rest position (i.e. upwards in Figure 2) by the spring 11 supported on an inner partition 31 of the casing 3 of the valve, and on a nut 4 associated to the first blocking element 1 and moving axially upon being rotated, whereby the pressure exerted by the spring 11 on the blocking element 1 in its closing or rest position can be preset. The blocking element 1 has a first contact surface 1A which makes contact with the outside, and a second contact surface 1 B which makes contact with the inside of the container. Both contact surfaces have the same diameters and sizes (at least in their projection on the plane orthogonal to the axial movement direction of the first blocking element), therefore, if the internal pressure is equal to the external pressure, the external pressure exerts the same force on the first contact surface 1A as the internal pressure exerts on the second contact surface 1 B, therefore the blocking element 1 remains in its closed position. These equal sizes ensure the correct operation of the valve regardless of the magnitudes of the external and internal pressure, i.e. regardless of the sea depth at which the container is located for example.

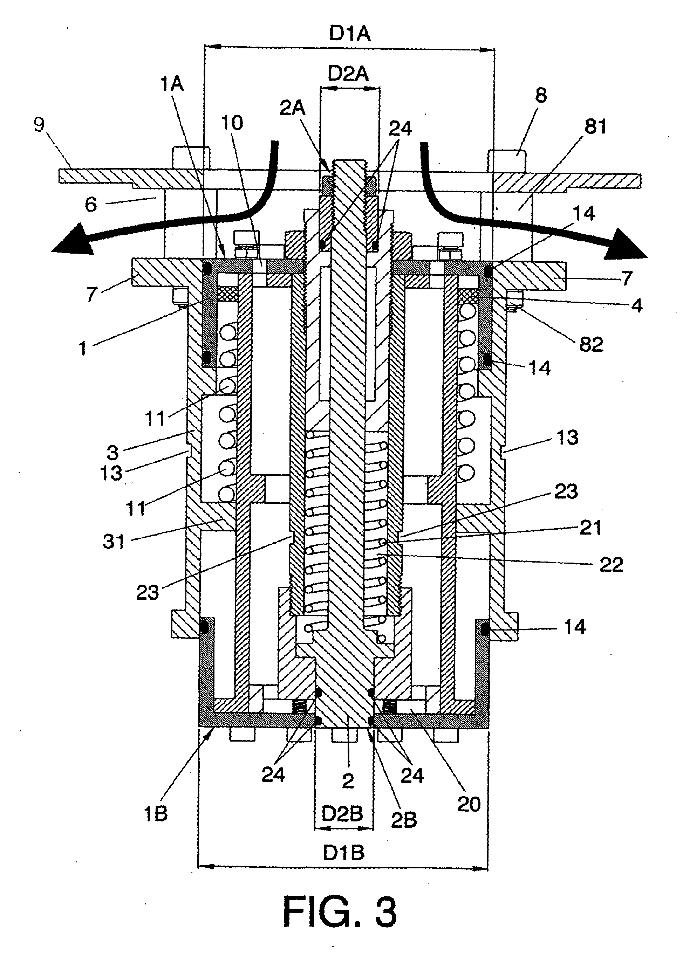

When the external pressure increases (and/or when the internal pressure is reduced), the force exerted in the downward direction on the first contact surface 1A exceeds the upward force exerted by the internal pressure on the second contact surface 1 B, which makes the first blocking element tend to move downwards, against the force exerted by the spring 11. When the external pressure is sufficiently greater than the internal pressure, the blocking element 1 moves sufficiently downwards so as to leave the inlets or holes 6 free, allowing the entrance of a fluid from the outside, as shown in Figure 3. It is thus ensured that the pressure difference between the outside and the inside does not exceed a predetermined threshold, because once the pressure difference exceeds said threshold, the valve opens and allows a fluid to pass from the outside to the inside, which is useful for increasing the pressure inside and reducing the mentioned pressure difference.

The first blocking element 1 is provided with a series of 0-ring seals 14 (with three seals in this specific case) which allows forming leak-tightness between the blocking element and the corresponding contact walls in the container and/or in the tubular casing 3. They further allow the chamber 12 in which the spring 11 is located to be to leak-tight, reducing the risk of corrosion or other damage to the spring 11.

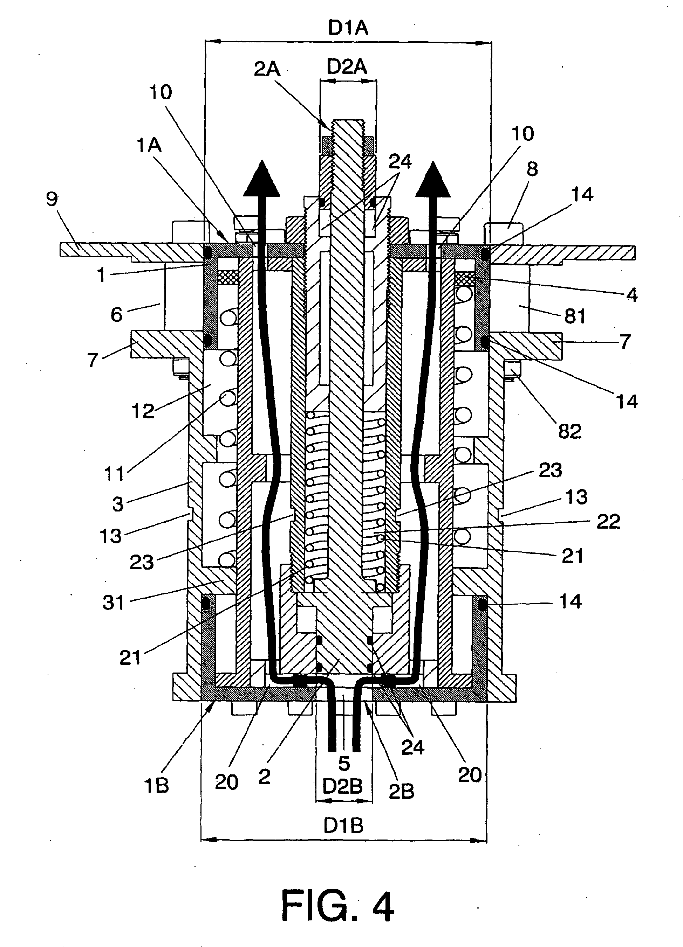

On the other hand, the valve comprises a second blocking element 2 assembled coaxially with the first blocking element 1 and inside the first blocking element, as can be seen in Figure 2. Three O-ring seals 24 allow the second blocking element 2 to move axially inside the first blocking element, maintaining leak-tightness. Figure 2 shows this second blocking element in its closed position, in which a fluid is prevented from passing from inside the container, through holes 5 (see Figure 4) and 20, until reaching the outside through other holes 10 at the upper part of the first blocking element 1.

The second blocking element 2 is also being pushed towards its closed position (observed in Figures 2 and 3) by a spring 21 arranged coaxially with the other spring 11. One end of this spring 21 is supported on a transverse partition of the second blocking element 2, and another end of the spring is supported on an end of a threaded element 25 (by way of a "nut") which is threaded in an inner tubular wall 15 of the first blocking element 1. The second blocking element 2 is thus movable with respect to the first blocking element 1 against the force of the spring 21 at hand. The force with which the spring pushes the second blocking element towards its closed position can be preset by means of the threaded element 25. The spring 21 is located in a leak-tight chamber 22.

The second blocking element has a first contact surface 2A which makes contact with the outside, and a second contact surface 2B which makes contact with the inside. The sizes (or their projection on the plane orthogonal to the axial movement direction) of both contact surfaces are identical. Therefore, when the internal pressure starts to exceed the external pressure, the second blocking element 2 is pressed "upwards" (towards the outside), against the force exerted by the spring 21, until reaching a position in which it no longer prevents the flow of fluid through the duct formed by the holes or passages 5, 20 and 10, as can be observed in Figure 4. When the internal pressure decreases with respect to the external pressure, the second blocking element returns to its closed position, pushed by the spring 21.

The identity between the areas of the first and second contact surfaces (which has been schematically shown in Figure 2: diameter D1A is equal to diameter D1B, and diameter D2A is equal to diameter D2B) makes the pressure difference a direct determinant for the force with which the corresponding element is pushed in one direction or another, and ensures the good operation of the system regardless of the depth at which the container is located.

The leak-tightness of the chambers 12 and 22 housing the respective springs is useful for preventing the springs from making contact with fluids which may place their integrity at risk.

However, the leak-tightness of these chambers requires that the walls be sized so as to withstand the forces which may be generated when a large difference between the pressure outside and inside the chambers occurs. To that end, it is convenient to provide the walls of these chambers with rupture disks or weak areas 13 and 23 (see Figure 2), which allows, in the event of an overpressure which may damage the integrity of the equipment, the walls of the chambers to break in a controlled manner and in controlled positions, allowing the fluid to enter the chambers 12 and 22, which can negatively affect the integrity of the springs in the long term, but which at least has no negative short-term effects on the operation of the valve.

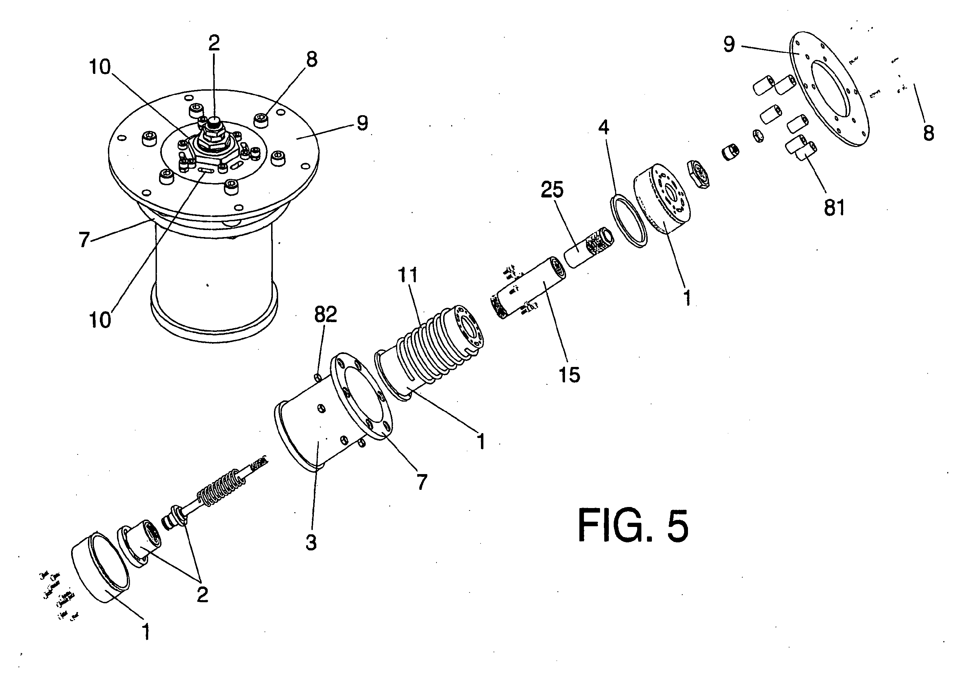

Figure 5 shows a perspective view and also an exploded view of the valve, showing the details of the some of the components described above.

In this text, the word "comprises" and its variants (such as "comprising", etc.) must not be interpreted in an exclusive manner, i.e., they do not exclude the possibility that the description can include other elements, steps etc.

On the other hand, the invention is not limited to the specific embodiments which have been described but also includes, for example, the variants which can be carried out by a person skilled in the art (for example, as regards the choice of materials, sizes, components, configuration, etc.), within what can be gathered from the claims.

## Claims

1. A valve configured to prevent an excessive pressure difference between the outside of a container and the inside of a container in which the valve is to be installed, wherein the valve comprises:
a first valve mechanism comprising a first blocking element (1) which can move between a closed position in which it prevents the passage of a fluid, and an open position in which it allows the passage of a fluid, between the outside and the inside, through a first part (6) of the valve; and
a second valve mechanism comprising a second blocking element (2) which can move between a closed position in which it prevents the passage of a fluid, and an open position in which it allows the passage of a fluid, between the inside and the outside, through a second part (5, 20, 10) of the valve;
the first blocking element (1) being associated to a first return element (11) configured to exert a force on the first blocking element towards its closed position;
and the second blocking element (2) being associated to a second return element (21) configured to exert a force on the second blocking element towards its closed position;
each blocking element comprising a first contact surface (1A, 2A) configured to make contact with the outside of the container and a second contact surface (1B, 2B) configured to make contact with the inside of the container when the valve is assembled in the container, such that a fluid in contact with the respective contact surface exerts a pressure force on said contact surface;
the first valve mechanism being configured such that the first blocking element (1) moves from its closed position to a position in which it allows the passage of the fluid, against the force exerted by the first return element (11), when the pressure on its first contact surface (1A) is X greater than the pressure on its second contact surface (1B), X being a predetermined value;
and the second valve mechanism being configured such that the second blocking element (2) moves from its closed position to a position in which it allows the passage of the fluid, against the force exerted by the second return element (21), when the pressure on the second contact surface (2B) is Y greater than the pressure on its first contact surface (2A), Y being a predetermined value;
**characterized in that**
the area of the first contact surface (1A) of the first blocking element is identical to the area of the second contact surface (1 B) of the first blocking element, as regards the projection of said contact surfaces on the plane orthogonal to a movement direction of the first blocking element,
and **in that**
the area of the first contact surface (2A) of the second blocking element is identical to the area of the second contact surface (2B) of the second blocking element, as regards the projection of said contact surfaces on the plane orthogonal to the movement direction of the second blocking element.

2. A valve according to claim 1, wherein each of said first and second return element (11, 21) comprises a spring.

3. A valve according to claim 2, wherein said springs (11, 21) are arranged coaxially with respect to one another.

4. A valve according to claim 3, wherein the spring corresponding to the second return element (21) is located inside the spring corresponding to the first return element (11).

5. A valve according to any of the previous claims, wherein the first blocking element (1) and the second blocking element (2) are arranged in an axially moving manner in a tubular casing (3).

6. A valve according to any of the previous claims, wherein the first valve mechanism is assembled coaxially with the second valve mechanism.

7. A valve according to any of the claims, wherein the movement direction of the first blocking element (1) in its movement between its closed position and its open position is opposite to the movement direction of the second blocking element (2) in its movement between its closed position and its open position.

8. A valve according to any of the previous claims, wherein both the first contact surface (1A) and the second contact surface (1B) of the first blocking element are substantially circular and with substantially identical diameters.

9. A valve according to any of the previous claims, wherein both the first contact surface (2A) and the second contact surface (2B) of the second blocking element are substantially circular and with substantially identical diameters.

10. A valve according to any of the previous claims, wherein the second blocking element (2) has an end part penetrating though the second contact surface (1 B) of the first blocking element, and another end part projecting through the first contact surface (1A) of the first blocking element.

11. A valve according to any of the previous claims, additionally comprising stress pre-regulation means (4, 25) for pre-regulating the stress of the return elements (11, 21), which allow presetting the force that said return means exert on the corresponding blocking elements in their respective blocking positions.

12. A valve according to claim 11, wherein said stress pre-regulation means (4, 25) comprise respective threaded elements which are assembled such that they are axially movable, by means of rotation, in the valve.

13. A valve according to any of the previous claims, wherein the return elements (11, 21) are arranged in leak-tight chambers (12, 22) inside the valve, such that they are protected from fluids present outside the container and inside the container when the valve is assembled in the container.

14. A valve according to claim 13, wherein at least one of said leak-tight chambers (12, 22) has at least one wall provided with at least one weak area (13, 23) so to allow a controlled breaking in the event of an excessive pressure difference between the inside and the outside of the corresponding leak-tight chamber.

15. A valve according to any of the previous claims, wherein, when the first blocking element (1) is in its open position, fluid can pass from outside to inside the container through holes (6) located close to the first contact surface (1A) of the first blocking element.

16. A valve according to any of the previous claims, wherein, when the second blocking element (2) is in its open position, fluid can pass from inside to outside the container through holes (20) located close to the second contact surface (1B) of the first blocking element.

17. A valve according to any of the previous claims, wherein the first blocking element (1) has, in correspondence with its first contact surface(1A), a plurality of holes (10) so as to allow the passage of a fluid from inside the container to outside when the valve is assembled in the container and when the second blocking element is in its open position.

18. A valve according to any of the previous claims, comprising a flange (7) configured to fix the valve to the opening of the container with the aid of fixing means (8, 9).

19. A container comprising at least one valve according to any of the previous claims.

20. A container according to claim 19, said container being a container located in a ship.

21. The use of a valve according to any of claims 1-18 in a container.

22. The use according to claim 21, the container being located in a ship.

## Patentansprüche

1. Ventil, das dazu eingerichtet ist, einen übermäßigen Druckunterschied zwischen dem Äußeren eines Containers und dem Inneren eines Containers, in dem das Ventil anzubringen ist, zu verhindern, wobei das Ventil enthält:
einen ersten Ventilmechanismus, enthaltend ein erstes Absperrelement (1), das sich zwischen einer ersten Stellung, in der es einen Durchgang eines Fluids verhindert, und einer geöffneten Stellung bewegen kann, in der es den Durchgang eines Fluids zwischen dem Äußeren und dem Inneren durch einen ersten Teil (6) des Ventils gestattet; und
einen zweiten Ventilmechanismus, der ein zweites Absperrelement (2) enthält, das sich zwischen einer geschlossenen Stellung, in der es den Durchgang eines Fluids verhindert, und einer geöffneten Stellung bewegen kann, in der es den Durchgang eines Fluids zwischen dem Inneren und dem Äußeren durch einen zweiten Teil (5, 20, 10) des Ventils gestattet;
wobei das erste Absperrelement (1) einem ersten Rückholelement (11) zugeordnet ist, das dazu eingerichtet ist, eine Kraft auf das erste Absperrelement in seine geschlossene Stellung auszuüben;
und das zweite Absperrelement (2) einem zweiten Rückholelement (21) zugeordnet ist, das dazu eingerichtet ist, eine Kraft auf das zweite Absperrelement in seine geschlossene Stellung auszuüben;
jedes Absperrelement eine erste Kontaktfläche (1 A, 2A), die dazu eingerichtet ist, einen Kontakt mit dem Äußeren des Containers herzustellen, und eine zweite Kontaktfläche (1 B, 2B) enthält, die dazu eingerichtet ist, einen Kontakt mit dem Inneren des Containers herzustellen, wenn das Ventil im Container montiert ist, so dass ein Fluid in Kontakt mit der entsprechenden Kontaktfläche eine Druckkraft auf die Kontaktfläche ausübt;
der erste Ventilmechanismus dazu eingerichtet ist, dass sich das erste Absperrelement (1) von seiner geschlossenen Stellung in eine Stellung, in der es den Durchgang des Fluids gestattet, gegen die Kraft bewegt, die von dem ersten Rückholelement (11) ausgeübt wird, wenn der Druck auf seine erste Kontaktfläche (1A) X-mal größer ist als der Druck auf seine zweite Kontaktfläche (1 B), wobei X ein vorbestimmter Wert ist;
und der zweite Ventilmechanismus so beschaffen ist, dass sich das zweite Absperrelement (2) aus seiner geschlossenen Stellung in eine Stellung, in der es den Durchgang des Fluids gestattet, gegen die Kraft bewegt, die von dem zweiten Rückholelement (21) ausgeübt wird, wenn der Druck auf die zweite Kontaktfläche (2B) Y-mal größer ist als der Druck auf seine erste Kontaktfläche (2A), wobei Y ein vorbestimmter Wert ist;
**dadurch gekennzeichnet, dass**
die Fläche der ersten Kontaktfläche (1 A) des ersten Absperrelementes identisch mit der Fläche der zweiten Kontaktfläche (1 B) des ersten Absperrelementes hinsichtlich der Projektion der Kontaktflächen auf eine Ebene ist, die orthogonal zu einer Bewegungsrichtung des ersten Absperrelementes verläuft,
und dadurch, dass
die Fläche der ersten Kontaktfläche (2A) des zweiten Absperrelementes identisch mit der Fläche der zweiten Kontaktfläche (2B) des zweiten Absperrelementes hinsichtlich der Projektion der Kontaktflächen auf eine Ebene ist, die orthogonal zur Bewegungsrichtung des zweiten Absperrelementes verläuft.

2. Ventil nach Anspruch 1, bei dem das erste und das zweite Rückholelement (11, 21) jeweils eine Feder enthalten.

3. Ventil nach Anspruch 2, bei dem die Federn (11, 21) koaxial zueinander angeordnet sind.

4. Ventil nach Anspruch 3, bei dem sich die Feder, die dem zweiten Rückholelement (21) entspricht, innerhalb der Feder befindet, die dem ersten Rückholelement (11) entspricht.

5. Ventil nach einem der vorhergehenden Ansprüche, bei dem das erste Absperrelement (1) und das zweite Absperrelement (2) axial beweglich in einem röhrenförmigen Gehäuse (3) angeordnet sind.

6. Ventil nach einem der vorhergehenden Ansprüche, bei dem der erste Ventilmechanismus koaxial mit dem zweiten Ventilmechanismus angeordnet ist.

7. Ventil nach einem der vorhergehenden Ansprüche, bei dem die Bewegungsrichtung des ersten Absperrelementes (1) bei seiner Bewegung zwischen seiner geschlossenen Stellung und seiner geöffneten Stellung entgegengesetzt zur Bewegungsrichtung des zweiten Absperrelementes (2) bei seiner Bewegung zwischen seiner geschlossenen und seiner geöffneten Stellung ist.

8. Ventil nach einem der vorhergehenden Ansprüche, bei dem sowohl die erste Kontaktfläche (1 A) als auch die zweite Kontaktfläche (1 B) des ersten Absperrelementes im wesentlichen kreisförmig sind und im wesentlichen denselben Durchmesser haben.

9. Ventil nach einem der vorhergehenden Ansprüche, bei dem sowohl die erste Kontaktfläche (2A) als auch die zweite Kontaktfläche (2B) des zweiten Absperrelementes im wesentlichen kreisförmig sind und im wesentlichen denselben Durchmesser haben.

10. Ventil nach einem der vorhergehenden Ansprüche, bei dem das zweite Absperrelement (2) einen Endteil, der durch die zweite Kontaktfläche (1 B) des ersten Absperrelementes ragt, und einen weiteren Endteil hat, der durch die erste Kontaktfläche (1 A) des ersten Absperrelementes ragt.

11. Ventil nach einem der vorhergehenden Ansprüche, zusätzlich enthaltend Spannungs-Voreinstelleinrichtungen (4, 25), die die Spannung der Rückholelemente (11, 21) voreinstellen und eine Voreinstellung der Kraft gestatten, die die Rückholeinrichtungen auf die entsprechenden Absperrelemente in ihren jeweiligen Absperrstellungen ausüben.

12. Ventil nach Anspruch 11, bei dem die Spannungs-Voreinstelleinrichtungen (4, 25) entsprechende Gewindeelemente enthalten, die derart angebracht sind, dass sie durch Drehung im Ventil axial beweglich sind.

13. Ventil nach einem der vorhergehenden Ansprüche, bei dem die Rückholelemente (11, 21) in leckdichten Kammern (12, 22) im Inneren des Ventils angeordnet sind, so dass sie vor Fluiden geschützt sind, die außerhalb des Containers und innerhalb des Containers vorhanden sind, wenn das Ventil im Container montiert ist.

14. Ventil nach Anspruch 13, bei dem wenigstens eine der Leckdichten Kammern (12, 22) wenigstens eine Wand hat, die mit wenigstens einem geschwächten Bereich (13, 23) versehen ist, um so ein kontrolliertes Brechen für den Fall eines übermäßigen Druckunterschiedes zwischen dem Inneren und dem Äußeren der jeweiligen leckdichten Kammer zuzulassen.

15. Ventil nach einem der vorhergehenden Ansprüche, bei dem, wenn sich das erste Absperrelement (1) in seiner geöffneten Stellung befindet, Fluid von außen in das Innere des Containers durch Löcher (6) eintreten kann, die dicht an der ersten Kontaktfläche (1 A) des ersten Absperrelementes angeordnet sind.

16. Ventil nach einem der vorhergehenden Ansprüche, bei dem, wenn sich das zweite Absperrelement (2) in der geöffneten Stellung befindet, Fluid vom Inneren an das Äußere des Containers durch Löcher (20) austreten kann, die in der Nähe der zweiten Kontaktfläche (1 B) des ersten Absperrelementes angeordnet sind.

17. Ventil nach einem der vorhergehenden Ansprüche, bei dem das erste Absperrelement (1) in Entsprechung seiner ersten Kontaktfläche (1 A) eine Vielzahl von Löchern (10) hat, um so den Durchgang eines Fluids vom Inneren des Containers zum Äußeren zu ermöglichen, wenn das Ventil im Container montiert ist und wenn sich das zweite Absperrelement in seiner geöffneten Stellung befindet.

18. Ventil nach einem der vorhergehenden Ansprüche, enthaltend einen Flansch (7), der so beschaffen ist, dass er das Ventil an der Öffnung des Containers mit Hilfe von Befestigungseinrichtungen (8, 9) befestigt.

19. Container, enthaltend wenigstens ein Ventil nach einem der vorhergehenden Ansprüche.

20. Container nach Anspruch 19, wobei der Container ein Container ist, der sich in einem Schiff befindet.

21. Verwendung eines Ventils nach einem der Ansprüche 1 bis 18 in einem Container.

22. Verwendung nach Anspruch 21, bei der sich der Container in einem Schiff befindet.

## Revendications

1. Soupape configurée pour éviter les différences de pression excessives entre l'extérieur et l'intérieur d'un conteneur dans lequel est installé la soupape,
soupape comprenant :
- un premier mécanisme de soupape ayant un premier élément de blocage (1) qui peut se déplacer entre une position fermée dans laquelle il interdit le passage d'un fluide, et une position ouverte dans laquelle il permet le passage d'un fluide, entre l'extérieur et l'intérieur, à travers une première pièce (6) de la soupape, et
- un second mécanisme de soupape ayant un second élément de blocage (2) qui peut se déplacer entre une position fermée dans laquelle il interdit le passage d'un fluide, et une position ouverte dans laquelle il autorise le passage d'un fluide entre l'intérieur et l'extérieur à travers une seconde pièce (5, 20, 10) de la soupape,
le premier élément de blocage (1) étant associé à un premier élément de rappel (11) exerçant une force sur le premier élément de blocage en direction de sa position fermée, et
le second élément de blocage (2) est associé à un second élément de rappel (21) exerçant une force sur le second élément de blocage en direction de sa position fermée,
chaque élément de blocage ayant une première surface de contact (1A, 2A) configurée pour faire le contact avec l'extérieur du conteneur et une seconde surface de contact (1B, 2B) configurée pour faire contact avec l'intérieur du conteneur lorsque la soupape est assemblée au conteneur de façon qu'aucun fluide en contact avec la surface de contact respective n'exerce une pression sur la surface de contact,
le premier mécanisme de contact est configuré pour que le premier élément de blocage (1) se déplace de sa position fermée à une position dans laquelle il permet le passage du fluide, contre la force exercée par le premier élément de rappel (11) lorsque la pression s'exerçant sur la première surface de contact (1A) est (X) fois supérieur à la pression s'exerçant sur sa seconde surface de contact (1B), (X) étant une valeur prédéterminée,
et le second mécanisme de soupape est configuré de façon que le second élément de blocage (2) se déplace de sa position fermée à une position ouverte dans laquelle il autorise le passage du fluide contre la force exercée par le second élément de rappel (21) lorsque la pression exercée sur la seconde surface de contact (2B) est (Y) fois supérieur à la pression exercée sur sa première surface de contact (2A), (Y) étant une valeur prédéterminée,
**caractérisé en ce que**
la mesure de la première surface de contact (1A) du premier élément de blocage est identique à la mesure de la seconde surface de contact (1B) du premier élément de blocage, dans le sens de la projection des surfaces de contact sur un plan perpendiculaire à la direction du mouvement du premier élément de blocage, et
**caractérisé en ce que**
la mesure de la première surface de contact (2A) du second élément de blocage est identique à la mesure de la seconde surface de contact (2B) du second élément de blocage lorsqu'on considère la projection des surfaces de contact sur un plan orthogonal à la direction de déplacement du second élément de blocage.

2. Soupape selon la revendication 1,
dans laquelle
le premier et le second élément de rappel (11, 21) sont des ressorts.

3. Soupape selon la revendication 2,
dans laquelle
les ressorts (11, 21) sont disposés co-axialement l'un par rapport à l'autre.

4. Soupape selon la revendication 3,
dans laquelle
le ressort correspondant au second élément de rappel (21) est placé à l'intérieur du ressort correspondant au premier élément de rappel (11).

5. Soupape selon l'une des revendications précédentes,
dans laquelle
le premier élément de blocage (1) et le second élément de blocage (2) sont disposés de façon axiale et mobile à la manière d'un boîtier tubulaire (3).

6. Soupape selon l'une revendications précédentes,
dans laquelle
le premier mécanisme de soupape est assemblé co-axialement au second mécanisme de soupape.

7. Soupape selon l'une revendications précédentes,
dans laquelle
la direction de mouvement du premier élément de blocage (1) dans son mouvement entre sa position fermée et sa position ouverte est opposée à la direction du mouvement du second élément de blocage (2) dans son mouvement entre sa position fermée et sa position ouverte.

8. Soupape selon l'une revendications précédentes,
dans laquelle
la première surface de contact (1A) et la seconde surface de contact (1B) du premier élément de blocage sont pratiquement circulaires et ont des diamètres pratiquement identiques.

9. Soupape selon l'une revendications précédentes,
dans laquelle
à la fois la première surface de contact (2A) et la seconde surface de contact (2B) du second élément de blocage sont pratiquement circulaires et ont des diamètres pratiquement identiques.

10. Soupape selon l'une revendications précédentes,
dans laquelle
le second élément de blocage (2) a une pièce d'extrémité pénétrant à travers la seconde surface de contact (1B) du premier élément de blocage et une autre pièce d'extrémité vient saillir à travers la première surface de contact (1A) du premier élément de blocage.

11. Soupape selon l'une revendications précédentes,
comprenant en outre :
un moyen de pré-régulation de contrainte (4, 25) pour pré réguler la contrainte des éléments de rappel (11, 21), permettant le pré réglage de la force exercée par les moyens de rappel sur les éléments de blocage correspondant dans leur position de blocage respective.

12. Soupape selon la revendication 11,
dans laquelle
le moyen de pré-régulation de contrainte (4, 25) comporte des éléments filetés respectifs assemblés de façon à être mobiles axialement par rotation dans la soupape.

13. Soupape selon l'une revendications précédentes,
dans laquelle
les éléments de rappel (11, 21) sont logés dans des chambres étanches (12, 22) à l'intérieur de la soupape de façon à être protégés contre les fluides extérieurs et intérieurs au conteneur lorsque la soupape est assemblée au conteneur.

14. Soupape selon la revendication 13,
dans laquelle
au moins l'une des chambres étanches (12, 22) comporte au moins une parois avec au moins une zone faible (13, 23) permettant une rupture contrôlée en cas de différence de pression excessive entre l'intérieur et l'extérieur de la chambre étanche correspondante.

15. Soupape selon l'une revendications précédentes,
dans laquelle
le premier élément de blocage (1) est en position ouverte et le fluide peut passer de l'extérieur vers l'intérieur du conteneur à travers des orifices (6) situés à proximité de la première surface de contact (1A) du premier élément de blocage.

16. Soupape selon l'une revendications précédentes,
dans laquelle
le second élément de blocage (2) est en position ouverte, et le fluide peut passer de l'intérieur vers l'extérieur du conteneur à travers les orifices (20) proche de la seconde surface de contact (1B) du premier élément de blocage.

17. Soupape selon l'une revendications précédentes,
dans laquelle
en correspondance avec sa première surface de contact (1A), le premier élément de blocage (1) a un ensemble d'orifices (10) de façon à permettre le passage d'un fluide de l'intérieur du conteneur vers l'extérieur lorsque la soupape est assemblée au conteneur et lorsque le second élément de blocage occupe sa position ouverte.

18. Soupape selon l'une revendications précédentes,
comportant :
une bride (7) configurée de manière à fixer la soupape à l'orifice du conteneur à l'aide de moyens de fixation (8, 9).

19. Conteneur comportant au moins une soupape selon une quelconque des revendications précédentes.

20. Conteneur selon la revendication 19,
le conteneur étant chargé dans un navire.

21. Utilisation d'une valve selon une quelconque des revendications 1 à 18 dans un conteneur.

22. Utilisation selon la revendication 21,
le conteneur étant chargé dans un navire.
